# EUROPÄISCHE PATENTSCHRIFT

(11) **EP 3 617 928 B1**
(45) Veröffentlichungstag und Bekanntmachung des Hinweises auf die Patenterteilung: **27.01.2021**
(21) Anmeldenummer: 18191073.8
(22) Anmeldetag: 28.08.2018
(51) Int. Cl.: G06F 21/76

(54) **VERFAHREN ZUM SPEICHERN VON SCHLÜSSELDATEN IN EINEM ELEKTRONISCHEN BAUTEIL**
METHOD FOR STORING KEY DATA IN AN ELECTRONIC COMPONENT
PROCÉDÉ DE MÉMORISATION DE DONNÉES DE CLÉ DANS UN COMPOSANT ÉLECTRONIQUE

(43) Veröffentlichungstag der Anmeldung: 04.03.2020
(73) Patentinhaber: Siemens Aktiengesellschaft, 80333 München (DE)
(72) Erfinder: Cech, Christian, 2483 Ebreichsdorf (AT); Hinterstoisser, Thomas, 2102 Bisamberg (AT); Matschnig, Martin, 3430 Tulln (AT); Taucher, Herbert, 1190 Wien (AT)
(74) Vertreter: Maier, Daniel Oliver

(56) Entgegenhaltungen:
- YALLA P ET AL: "Lightweight Cryptography for FPGAs", RECONFIGURABLE COMPUTING AND FPGAS, 2009. RECONFIG '09. INTERNATIONAL CONFERENCE ON, IEEE, PISCATAWAY, NJ, USA, 9. Dezember 2009 (2009-12-09), Seiten 225-230, XP031611501, ISBN: 978-1-4244-5293-4
- Xilinx: "Spartan-3 FPGA Family Data Sheet (ver3.1)", , 27. Juni 2013 (2013-06-27), XP055522218, Gefunden im Internet: URL:https://www.xilinx.com/support/documen tation/data_sheets/ds099.pdf [gefunden am 2018-11-08]
- Anonymous: "Field-programmable gate array - Wikipedia", , 22. August 2018 (2018-08-22), XP055522362, Gefunden im Internet: URL:https://en.wikipedia.org/w/index.php?t itle=Field-programmable_gate_array&oldid=8 56027570 [gefunden am 2018-11-08]

## Beschreibung

### Technisches Gebiet

Die vorliegende Erfindung betrifft allgemein das Gebiet der elektronischen Systeme und Schaltungen, insbesondere programmierbare, integrierte Schaltungen wie z.B. Field Programmable Gate Arrays (FPGAs). Im Speziellen bezieht sich die vorliegende Erfindung auf ein Verfahren zum Speichern von Schlüsseldaten in einem elektronischen Bauteil, welcher als programmierbare, integrierte Schaltung, insbesondere als Field Programmable Gate Array oder FPGA, ausgeführt ist und eine aus einer Vielzahl an Basiselementen bestehende Grundstruktur aufweist. Dabei werden für eine jeweils aktuelle Programmierung bzw. Schaltungsfunktion des elektronischen Bauteils Konfigurationsdaten aus einem Konfigurationsspeicher in die jeweils genutzten Basiselemente geladen und dort flüchtig gespeichert.

### Stand der Technik

Integrierte Schaltungen, wie z.B. anwendungsspezifische, integrierte Schaltungen (kurz ASICs) oder so genannte Field Programmable Gate Arrays (kurz FPGAs), sind elektronische Bauteile, welche heutzutage in vielen elektrischen und/oder elektronischen Geräten oder Systemen eingesetzt werden.

Insbesondere mit elektronischen Bauteilen, welche als programmierbaren bzw. rekonfigurierbaren, integrierten Schaltungen (z.B. FPGAs) ausgeführt sind, können durch entsprechende Konfiguration verschiedene logische Schaltungen und Funktionen realisiert werden, welche beispielsweise von einfachen Zählern oder Schnittstellen für Digitalbausteine bis zu hochkomplexen Schaltungen wie z.B. Speicher-Kontroller oder Mikroprozessoren reichen können. Programmierbar bzw. rekonfigurierbar bezieht sich dabei nicht nur auf eine Vorgabe zeitlicher Abläufe, sondern vor allem auf eine Definition einer Schaltungsstruktur, um eine gewünschte Schaltung und/oder Schaltungsfunktion zu erzielen. Diese Definition wird in einer so genannten Designphase z.B. mittels einer Hardwarebeschreibungssprache (z.B. VHDL, Verilog, etc.) formuliert und in einer so genannten Synthesephase mittels eines Synthesewerkzeugs in eine so genannte Netzliste übersetzt, aus welcher schließlich durch Placement und Routing ein physikalisches Layout erzeugt wird. Das dieser Netzliste entsprechende Bit-File stellt die Konfigurationsdaten dar, von welchen vorgegeben wird, wie die physikalischen Elemente der programmierbaren, integrierten Schaltung bzw. des elektronischen Bauteils verschaltet bzw. konfiguriert werden sollen.

Durch Laden der Konfigurationsdaten in eine programmierbaren, integrierten Schaltung (z.B. FPGA) können basierend auf einer Grundstruktur der programmierbaren, integrierten Schaltung verschiedene logische Schaltungen und/oder Schaltungsfunktionen realisiert und bei Bedarf verändert bzw. umkonfiguriert werden. Die wesensbestimmende Grundstruktur einer programmierbaren, integrierten Schaltung wie z.B. einem FPGA stellt ein Feld (engl. Array) aus Basiselementen dar. Ein FPGA kann heutzutage beispielsweise aus einigen zehntausend bis zu einer Million Basiselementen bestehen.

Ein Basiselement einer programmierbaren, integrierten Schaltung besteht üblicherweise aus einer einfach zu programmierenden Logikschaltung und einem meist als Flip-Flop ausgeführten 1-Bit-Register dar. Die Logikschaltung kann beispielsweise als Verknüpfung verschiedener Logikgatter, die über elektronische Schalter entsprechend der vom Entwickler gewünschten Funktion miteinander verknüpft werden können, ausgeführt sein. Alternativ kann die Logikschaltung eines Basiselements z.B. als programmierbare Lookup-Tabelle bzw. Look-Up-Table (kurz LUT) ausgeführt sein, mit welcher eine gewünschte Logikfunktion (z.B. NAND, XOR, AND, Multiplexer etc.) explizit realisiert wird. Die Programmierung der gewünschten Logikfunktion eines Basiselements erfolgt dann durch Hinterlegung einer definierenden Wahrheitstabelle in einer zum Basiselement zugeordneten Konfigurations- bzw. Speicherzelle, die Funktionsberechnung durch Auslesen der durch die Eingänge bestimmten Speicheradresse.

Die Konfigurations- oder Speicherzellen einer programmierbaren bzw. rekonfigurierbaren Schaltung können als so genanntes Static RAM oder SRAM-Zellen ausgestaltet sein, welche durch einem Bootprozess vor dem jeweiligen Einsatz mit den entsprechenden Konfigurationsdaten für das jeweilige Basiselement geladen werden. Da die SRAM-Zellen ihren Inhalt beim Abschalten einer Versorgungsspannung verlieren - d.h. die Konfigurationsdaten nur flüchtig abgespeichert sind, muss die programmierbare, integrierte Schaltung bei jedem Einschalten neu konfiguriert bzw. programmiert werden. Das Laden der jeweiligen Konfigurationsdaten kann dabei aus einer internen oder externen, nicht flüchtigen Speichereinheit (z.B. einer Art EPRPOM, etc.) erfolgen.

Allerdings bieten derartige SRAM-basierte Schaltungen wie z.B. SRAM-basierte FPGAs üblicherweise keine Möglichkeit sicherheitsrelevante Daten wie z.B. kryptographische Schlüsseldaten permanent und sicher in der programmierbaren Logik bzw. in der programmierbaren, integrierten Schaltung abzuspeichern. Eine Möglichkeit ist daher z.B. die Verwendung eines externen Sicherheitschips, in welchem die jeweiligen kryptographischen Schlüsseldaten abgelegt werden. Dabei ist aber eine zusätzliche Verschlüsselung zwischen dem Sicherheitschip und der programmierbaren, integrierten Schaltung notwendig, um ein unzulässiges Auslesen der Schlüsseldaten zu verhindern. Weiterhin weist der Einsatz eines externen Sicherheitschips die Nachteile von zusätzlichen Kosten und einer meist eher geringen Datenübertragungsrate zwischen Sicherheitschip und elektronischen Bauteil bzw. integrierter Schaltung auf.

Eine weitere Möglichkeit für sichere Schlüsseldaten stellt beispielsweise die Verwendung so genannter Physical Unclonable Functions (kurz PUFs) dar wie z.B. in der Schrift: J. Guajardo et al. "Anti-Counterfeiting, key distribution, and key storage in an ambient world of physical unclonable functions", Information Systems Frontiers, Vol. 11, issue 1, pp 19-41, March 2009. Dabei können z.B. mit Hilfe von Korrekturschaltungen (z.B. Fuzzy Extractors) und Hilfsdaten aus spezifischen Daten der integrierten Schaltung bzw. des elektronischen Bauteils selbst wie z.B. Initialwerten der Konfigurationszellen oder Laufzeiteigenschaften, etc. Schlüsseldaten rekonstruiert. Diese Rekonstruktion ist allerdings vom jeweiligen physikalischen, elektronischen Bauteil abhängig. Weiterhin werden für diese Rekonstruktion zusätzliche Ressourcen der integrierten Schaltung benötigt.

Um beispielsweise Schlüsseldaten - vor allem zum Entschlüsseln der Konfigurationsdaten (Binärfile der Konfiguration) beim Laden in die Grundstruktur des Bauteils - in derartigen Bauteilen bzw. Schaltungen permanent zu hinterlegen bzw. deren Rekonstruktion durch widerrechtlichen Zugriff auf die Schaltung verhindern zu können, können, wie z.B. in den Schriften: Austin Lesea, "IP Security in FPGAs" Xilinx White Paper: Virtex-4 and Virtex-5 Devices, 2007. oder Ching Hu, "Solving Today's Design Security Concerns" Xilinx White Paper: FPGAs, 2010, page 8. beschrieben, entweder Batterie-gepufferte Speicherzellen, insbesondere Batterie-gepufferte RAMs oder so genannte eFuse-Zellen eingesetzt werden.

Beim Einsatz einer Batterie-gepufferten Speicherzelle ist allerdings eine permanente Energieversorgung z.B. über eine Batterie vorzusehen, da sonst der Inhalt der Speicherzelle verloren geht. Weiterhin müssen beispielsweise weitere Schutzmechanismen z.B. gegen Sabotage und/oder widerrechtliches Auslesen und Rekonstruieren vorgesehen werden - wie z.B. ein Löschen der Schlüsseldaten bei Feststellen eines Sicherheitsproblems. Alternativ können so genannte eFuse-Zellen zum Speichern der Schlüsseldaten eingesetzt werden. Allerdings können Strukturen aus eFuse-Zellen aufgrund ihrer Größe leicht im elektronischen Bauteil identifiziert und mittels so genannten Reverse-Engineering rekonstruiert werden. Alternativ kann auch anstatt einer SRAM-basierten, integrierten Schaltung eine so genannte Flash-basierte, integrierte Schaltung (z.B. Flash-basiertes FPGA) verwendet werden. Bei einer Flash-basierten Schaltung werden so genannte Flash-Speicherzellen als Konfigurationszellen eingesetzt, welche im Gegensatz zu SRAM-Speicherzellen eine nicht flüchtig Speicherung von Daten (z.B. der Konfigurationsdaten) ermöglichen. Derartige Flash-basierte Schaltungen bieten beispielsweise die Möglichkeit Schlüsseldaten in einer sicheren Flash-Speichereinheit abzulegen. In diesem Fall bleiben die Schlüsseldaten auch bei einem stromlosen Zustand - also permanent - gespeichert und sind üblicherweise nicht einfach auslesbar. Allerdings ist der Einsatz eines Flash-basierten Bauteils bzw. einer Flash-basierten, integrierten Schaltung mit relativ hohen Kosten, zusätzlichen Aufwänden und einer gegebenenfalls höheren Fehleranfälligkeit verbunden.

Der Stand der Technik umfasst des Weiteren die Veröffentlichung "Lightweight Cryptography for FPGAs" von Panasayya Yalla und Jens-Peter Kaps (DOI 10.1109/ReConFig.2009.54).

### Darstellung der Erfindung

Der Erfindung liegt daher die Aufgabe zugrunde, ein Verfahren zum Speichern von kryptographischen Schlüsseldaten in einem als programmierbare, integrierte Schaltung ausgeführten, elektronischen Bauteil anzugeben, durch welches kryptographische Schlüsseldaten auf einfache und kostengünstige Weise sicher und quasi-permanent in einer programmierbaren Logik bzw. im elektronischen Bauteil ohne zusätzlichen Aufwand gespeichert werden können.

Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben. Erfindungsgemäß erfolgt die Lösung der Aufgabe durch ein Verfahren der eingangs angeführten Art zum Speichern von kryptographischen Schlüsseldaten in einem elektronischen Bauteil. Dieser elektronische Bauteil ist als programmierbare bzw. rekonfigurierbare, integrierte Schaltung, insbesondere als so genanntes Field Programmable Gate Array (kurz FPGA) ausgeführt und weist eine aus Basiselementen bestehende Grundstruktur - ein so genanntes Feld oder Array - auf. Für eine jeweils aktuelle Programmierung mit einer vorgegebenen Schaltungsfunktion werden Konfigurationsdaten in die jeweiligen Basiselemente des elektronischen Bauteils, welche für die jeweilige Schaltungsfunktion genutzt werden, geladen und flüchtig abgespeichert. Die kryptographischen Schlüsseldaten werden in Schlüsselteildatenblöcken - z.B. in einer Designphase - unterteilt und weiterhin für jeden der Schlüsselteildatenblöcke eine Basiselementposition in der Grundstruktur des elektronischen Bauteils ausgewählt. Beim Erstellen der Konfigurationsdaten für die jeweils aktuelle Programmierung bzw. Schaltungsfunktion des elektronischen Bauteils werden die ausgewählten Basiselementpositionen der Schlüsselteildatenblöcke berücksichtigt. Beim Laden der Konfigurationsdaten der jeweils aktuellen Programmierung des elektronischen Bauteils werden die Schlüsselteildatenblöcke in jenen Basiselementen ablegt, welche durch die ausgewählten Basiselementpositionen definiert werden. Nach erfolgter Programmierung des elektronischen Bauteils werden die Schlüsselteildatenblöcke aus den jeweiligen, durch die ausgewählten Basiselementpositionen vorgegebenen Basiselementen ermittelt und zu den Schlüsseldaten zusammengesetzt.

Der Hauptaspekt der erfindungsgemäß vorgeschlagenen Lösung besteht darin, dass die kryptographischen Schlüsseldaten auf einfache und sichere Weise und ohne zusätzlichen Aufwand quasi permanent in der jeweils aktuellen Programmierung bzw. in der jeweiligen Schaltungsfunktion des elektronischen Bauteils hinterlegt sind. Dabei werden die Schlüsseldaten allerdings nicht permanent z.B. auf einer auslesbaren Position (z.B. externen oder internen Speicher) des elektronischen Bauteils oder im Quellkode oder in den Konfigurationsdaten der jeweiligen aktuellen Programmierung gespeichert, sondern erst während des Betriebs des elektronischen Bauteils - d.h. zur Laufzeit anhand der ausgewählten bzw. vorgegebenen Basiselementpositionen aus der Grundstruktur des elektronischen Bauteils extrahiert und zusammengesetzt. Ohne Kenntnis der vorgegebenen Basiselementpositionen können damit die Schlüsseldaten nicht ermittelt werden. Die Basiselemente, in welchen Schlüsselteildatenblöcke abgelegt werden, werden erst beim Laden der Konfigurationsdaten für die jeweils aktuelle Programmierung bzw. Schaltungsfunktion des elektronischen Bauteils durch die ausgewählten Basiselementpositionen festgelegt. D.h. die ausgewählten Basiselementpositionen werden zwar bei der Erstellung der Konfigurationsdaten berücksichtigt, damit diese Positionen verfügbar sind, sie werden aber nicht in den Konfigurationsdaten abgelegt und sind damit von diesen bzw. vom Quellkode der jeweils aktuellen Programmierung unabhängig. Ohne Kenntnis der ausgewählten Basiselementpositionen können damit die Schlüsseldaten nicht korrekt rekonstruiert werden.

Dabei ist es von Vorteil, wenn die für die jeweiligen Schlüsseldatenblöcke ausgewählten Basiselementpositionen als Positionierungsvorgaben in einem Sperrdatenelement abgelegt werden. Dabei können im Sperrdatenelement z.B. eine einzelne Position, mehrere Positionen oder ein oder mehrere Positionsbereiche spezifiziert werden. Für eine Berücksichtigung der im Sperrdatenelement abgelegten Positionierungsvorgaben können Anweisungen oder Befehle beispielsweise in einer Designphase in eine so genannte Constraints-Datei eingefügt werden, durch welche z.B. absolute Platzierungen z.B. von Designelementen innerhalb der Grundstruktur des elektronischen Bauteils spezifiziert und definiert werden können. Beim Erstellen der Konfigurationsdaten für die Schaltung können die Positionen - z.B. während einer Synthesephase - mittels der entsprechenden Anweisungen oder Befehle in der Constraints-Datei gesperrt bzw. für bestimmte Designelemente festgelegt werden. Eine Angabe und Ermittlung der jeweiligen Basiselementposition in der Grundstruktur kann beispielsweise in Form von logischen Koordinaten (z.B. in Form von Zeilen und Spalten) erfolgen. Durch die Positionsvorgaben im Sperrdatenelement bzw. durch Einfügen entsprechender Anweisungen bzw. Befehle in der Constraints-Datei werden auf einfache Weise die Basiselementpositionen fixiert, an welchen die Schlüsselteildatenblöcke hinterlegt sind und aus welche sie zur Laufzeit extrahiert werden können.

Beim Erstellen und Laden der Konfigurationsdaten werden dann die im Sperrdatenelement abgelegten Basiselementpositionen berücksichtigt. Ohne Kenntnis des Sperrdatenelements bzw. der darin abgelegten Positionierungsvorgaben für die jeweiligen Schlüsseldatenblöcke können zwar beispielsweise eine aktuelle Programmierung und/oder die zugehörigen Konfigurationsdaten kopiert werden und z.B. auf einem anderen elektronischen Bauteil zum Laufen gebracht werden. Allerdings können keinen Änderungen am Quellkode oder den Konfigurationsdaten (z.B. Netzliste) ohne Kenntnis des Sperrdatenelements durchgeführt werden, da dann die Schlüsseldaten nicht korrekt rekonstruiert werden können. Denn jede Änderung würde eine neue Übersetzung der Schaltungsfunktion erforderlich machen, welche zu neuen Konfigurationsdaten führt. Diese neuen Konfigurationsdaten würden allerdings ohne Kenntnis des Sperrdatenelements falsche Schlüsseldaten zurückgegeben.

Idealerweise wird das Sperrdatenelement, in welchem die für die Schlüsselteildatenblöcke ausgewählten Basiselementpositionen abgelegt sind, in einem Permanentspeicher - am besten verschlüsselt - abgelegt. Durch die getrennte und idealerweise verschlüsselte Speicherung sind die Basiselementpositionen der Schlüsseldaten z.B. bei einem Sicherheitsangriff auf das elektronisch Bauteil nur sehr schwer zu eruieren. Durch die Nutzung eines Permanentspeichers (z.B. Flash-Speicher), welcher idealerweise nicht Teil des elektronischen Bauelements bzw. der integrierten Schaltung ist, geht das Sperrdatenelement auch bei Abschalten der Betriebsspannung nicht verloren.

Es ist weiterhin günstig, wenn die kryptographischen Schlüsseldaten derart in Schlüsselteildatenblöcke unterteilt werden, dass der jeweilige Schlüsselteildatenblock genau in einem Basiselement der Grundstruktur ablegbar ist. Das bedeutet, die Schlüsseldaten werden in Schlüsselteildatenblöcke unterteilt, welche eine derartige Datengröße aufweisen, dass der jeweilige Schlüsselteildatenblock genau in einem Basiselement bzw. in einer zugehörigen, dynamischen Konfigurationszelle platzierbar ist. Das entsprechende Basiselement wird dann durch die ausgewählte Basiselementposition in der Grundstruktur vorgegeben.

Bei einer bevorzugten Ausführungsvariante der gegenständlichen Erfindung empfiehlt es sich, wenn eine Auswahl der Basiselementpositionen für die Schlüsseldatenteilblöcke nach einem Zufallsprinzip durchgeführt wird. D.h. die Basiselementpositionen in der Grundstruktur für die Schlüsseldaten werden zufällig und beliebig festgelegt. Die Positionen der Schlüsseldaten in der Grundstruktur des elektronischen Bauteils sind damit beispielsweise für einen potentiellen Angreifer nur schwierig zu ermitteln, da die Positionen z.B. kein nachvollziehbares Muster, etc. aufweisen.

Weiterhin empfiehlt es sich, wenn das Basiselement der Grundstruktur des elektronischen Bauteils von einer so genannten Lookup-Table- oder LUT-Einheit und einer zugeordneten, dynamischen Konfigurationszelle gebildet wird. Für eine Realisierung der jeweiligen, aktuellen Schaltungsfunktion werden entsprechende Konfigurationsdaten für das jeweils genutzte Basiselement in einer dynamischen, zum Basiselement gehörenden Konfigurationszelle abgelegt, welche zum Konfigurationsspeicher der elektronischen, integrierten Schaltung gehört und deren Inhalt beim Hochlaufen der elektronischen, integrierten Schaltung in die LUT-Einheit des Basiselements geladen wird. Eine LUT-Einheit ist dabei in der digitalen Schaltungstechnik bzw. bei elektronischen, integrierten Schaltungen eine Logikeinheit, mit welcher durch Laden einer entsprechenden, zugehörigen Konfiguration, insbesondere in Form einer Logiktabelle, aus der zugehörigen Konfigurationsspeicherzelle beim Hochlaufen der Schaltung eine gewünschte Funktion (z.B. AND, OR, NOR, XOR oder auch komplexere Funktionen) realisiert werden kann.

Es ist günstig, wenn die Konfigurationszelle des jeweiligen Basiselements als so genannte Static RAM ausgeführt wird. Ein Static RAM ist ein elektronischer, flüchtiger Speicherbaustein, welcher eine in ihm abgelegte Dateninformation behält, solange die Betriebsspannung angelegt ist. Alternativ können die Konfigurationszellen auch als so genannte Flash-Speicher ausgeführt sein, welche einen nichtflüchtige Speicherung bei gleichzeitig niedrigem Energieverbrauch ermöglichen.

Eine bevorzugte Fortbildung des erfindungsgemäßen Verfahrens sieht vor, dass die Schlüsselteildatenblöcke von einer Steuereinheit über eine Konfigurationsschnittstelle des elektronischen Bauteils unter Nutzung einer Information über die ausgewählten Basiselementpositionen aus den jeweiligen Basiselementen ausgelesen und zu den Schlüsseldaten zusammengesetzt werden. Die Konfigurationsschnittstelle ist dabei z.B. eine spezielle vom Hersteller des elektronischen Bauteils vorgegebene Schnittstelle, über welche die Steuereinheit - ein so genannter Controller - während des Betriebs des elektronischen Bauteils bzw. zur Laufzeit die in den Basiselementen bzw. in den zugehörigen Konfigurationszellen abgelegten Inhalte, welche durch die ausgewählten Basiselementpositionen ermittelt und diese zu den kryptographischen Schlüsseldaten zusammensetzt.

Alternativ oder zusätzlich, können die Schlüsselteildatenblöcke mit Hilfe einer eigenen Applikation über eine Konfigurationsschnittstelle aus den jeweiligen Basiselementen ausgelesen und zu den Schlüsseldaten zusammengesetzt werden, wobei von der Applikation eine Information über die ausgewählten Basiselementpositionen verwendet wird. Dabei werden die Inhalte der an den ausgewählten Basiselementpositionen befindlichen Basiselemente bzw. zugehörigen Konfigurationszellen von einer Applikation ausgelesen und zu den Schlüsseldaten zusammengesetzt. Die Applikation kann dabei als ausführbare Softwareeinheit ausgestaltet sein, welche in einer internen Speichereinheit des elektronischen Bauteils oder in einer externen Speichereinheit abgelegt ist.

### Kurzbeschreibung der Zeichnung

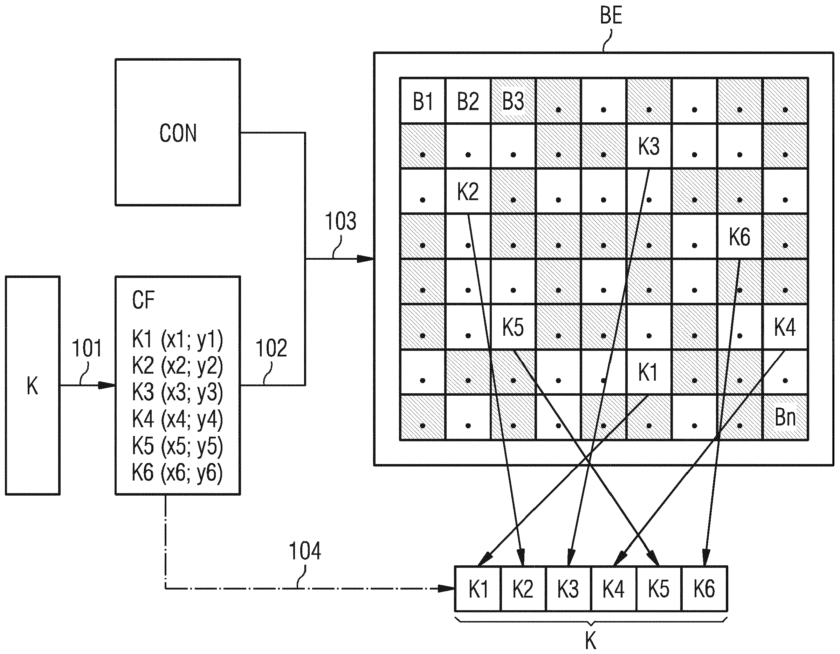

Die Erfindung wird nachfolgend in beispielhafter Weise anhand der beigefügten Figur 1 erläutert. Diese zeigt einen beispielhaften Ablauf des erfindungsgemäßen Verfahrens zum Speichern von kryptographischen Schlüsseldaten in einem elektronischen Bauteil.

### Ausführung der Erfindung

Figur 1 zeigt in schematischer Weise ein beispielhaftes elektronisches Bauteil BE. Dieses elektronische Bauteil BE ist als programmierbare bzw. rekonfigurierbare, integrierte Schaltung wie z.B. als so genanntes Field Programmable Gate Array oder FPGA ausgeführt. Das elektronische Bauteil BE weist daher eine Grundstruktur auf, welche auch einer Vielzahl aus Basiselementen B1, B2, B3, ..., Bn besteht, welche beispielhaft in der Figur 1 dargestellt sind.

Ein derartiges Basiselement B1, B2, B3, ..., Bn der Grundstruktur des elektronischen Bauteils BE kann beispielsweise von einer so genannten Lookup-Table- oder LUT-Einheit und einer zugeordneten, dynamischen Konfigurationseinheit gebildet werden. Die Konfigurationseinheit kann z.B. als so genanntes Static RAM ausgeführt sein, in welchem eine aktuelle Konfiguration der LUT-Einheit flüchtig gespeichert ist.

Für eine aktuelle Programmierung bzw. Schaltungsfunktionalität des elektronischen Bauteils BE werden Konfigurationsdaten CON in die Basiselemente B1, B2, B3, ..., Bn geladen. Dazu wird z.B. in einer so genannten Designphase z.B. mittels einer Hardwarebeschreibungssprache (z.B. VHDL, Verilog, etc.) eine Schaltungsstruktur definiert, durch welche die gewünschte Schaltungsfunktion für das elektronische Bauteil BE vorgegeben wird. In einer so genannten Synthesephase wird diese Schaltungsstruktur von einem so genannten Synthesetool in eine so genannte Netzliste übersetzt. Ein dieser Netzliste entsprechendes Bit-File bildet dann beispielsweise die Konfigurationsdaten CON, von welchen vorgegeben wird, welche der Basiselemente B1, B2, B3, ..., Bn für die jeweilige, aktuelle Programmierung genutzt und wie die genutzten Basiselemente B1, B2, ... des elektronischen Bauteils BE konfiguriert bzw. verschaltet werden sollen. In dem in Figur 1 beispielhaft dargestellten Bauteil BE sind beispielsweise für eine aktuelle Programmierung bzw. Schaltungsfunktion genutzte Basiselemente B1, B2, ... weiß dargestellt und nicht benutzte Basiselemente B3, Bn, ... mit einer Schraffur versehen.

Für das erfindungsgemäße Verfahren werden in einem Unterteilungsschritt 101 kryptographische Schlüsseldaten K, welche z.B. während einer Laufzeit der integrierten Schaltung bzw. des elektronischen Bauteils BE benötigt werden, in Schlüsselteildatenblöcke K1, K2, ..., K6 unterteilt. Ein einzelner Schlüsselteildatenblock K1, K2, ..., K6 kann dabei z.B. eine Datengröße derart aufweisen, dass der jeweilige Schlüsselteildatenblock K1, K2, ..., K6 genau in einem Basiselement B1, B2, B3, ..., Bn des elektronischen Bauteils bzw. in der jeweils zum Basiselement B1, B2, B3, ..., Bn gehörenden, dynamischen Konfigurationszelle ablegbar ist.

In einem Auswahlschritt 102 werden für die jeweiligen Schlüsselteildatenblöcke K1, K2, ..., K6 Basiselementpositionen in der Grundstruktur des elektronischen Bauteils BE ausgewählt. Die Auswahl der jeweiligen Basiselementpositionen kann beispielsweise nach einem Zufallsprinzip durchgeführt werden. Die Angabe der jeweiligen Basiselementposition in der Grundstruktur für den jeweiligen Schlüsselteildatenblock K1, K2, K3, ..., K6 kann beispielsweise in Form von logischen Koordinaten (Zeile und Spalte) erfolgen. So kann z.B. einem ersten Schlüsselteildatenblock K1 ein Basiselement mit einem ersten Koordinatenpaar x1, y1 zugeordnet werden, einem zweiten Schlüsselteildatenblock K2 ein Basiselement mit einem zweiten Koordinatenpaar x2, y2, usw. Die jeweils erste Koordinate x1, x2, ... des Koordinatenpaars x1, y1; x2, y2; ... gibt dabei z.B. eine Zeile in der Grundstruktur des elektronischen Bauteils BE an, in welcher sich das jeweilige Basiselement B1, ..., Bn angeordnet. Die jeweils zweite Koordinate y1, y2, ... des Koordinatenpaars x1, y1; x2, y2; ... gibt z.B. eine Spalte in der Grundstruktur des elektronischen Bauteils BE an, in welcher sich das jeweilige Basiselement B1, ..., Bn befindet. Die für die Schlüsselteildatenblöcke K1, K2, ..., K6 ausgewählten Basiselementpositionen bzw. entsprechenden Koordinaten x1, y1; x2, y2; ...; x6, y6 können beispielsweise in einem Sperrdatenelement CF als Positionierungsvorgaben für die Positionierung jeweiligen Schlüsseldatenblöcke abgelegt werden. Auf Basis dieser Positionierungsvorgaben aus dem Sperrdatenelement CF können in eine so genannten Constraints-Datei entsprechende Anweisungen eingefügt werden, um die Positionen der Schlüsselteildatenblöcke K1, K2, ..., K6 während der Erstellung der Konfigurationsdaten CON in der Synthesephase in der Grundstruktur fix zu definieren bzw. zu sperren. Das Sperrdatenelement CF kann z.B. in einem Permanentspeicher, idealerweise verschlüsselt, abgelegt werden.

Der Unterteilungsschritt 101 und der Auswahlschritt 102 des erfindungsgemäßen Verfahrens können beispielweise während oder nach einer Designphase für die jeweilige aktuelle Programmierung bzw. Schaltungsfunktion des elektronischen Bauteils BE durchgeführt werden. Bei Erstellen der Konfigurationsdaten CON für die aktuelle Programmierung des elektronischen Bauteils BE - d.h. während der Synthesephase - werden die ausgewählten Basiselementpositionen x1, y1; ...; x6, y6 der Schlüsselteildatenblöcke K1, ..., K6 berücksichtigt. D.h. es wird beispielsweise die Positionsinformation x1, y1; ...; x6, y6 aus dem Sperrdatenelement CF mittels der so genannte Constraints-Datei in die aktuellen Konfigurationsdaten CON eingearbeitet. Diese Basiselementpositionen x1, y1; ...; x6, y6 sind dann z.B. für eine Platzierung von anderen Designelementen oder -funktion nicht nutzbar bzw. gesperrt.

Bei einem Ladeschritt 103 werden dann für die aktuelle Programmierung bzw. Schaltungsfunktionalität die z.B. mittels Synthese aktuell erzeugten Konfigurationsdaten CON in die Basiselemente B1, B2, B3, ..., Bn geladen. Dabei werden in jenen Basiselementen die jeweiligen Schlüsselteildatenblöcke K1, ..., K6 abgelegt, welche durch die ausgewählten Basiselementpositionen x1, y1; ...; x6, y6 vorgegeben wurden. D.h. in einem Basiselement mit einer ersten Basiselementposition x1, y1 wird der erste Schlüsselteildatenblock K1, in einem Basiselement mit einer zweiten Basiselementposition x2, y2 wird der zweite Schlüsselteildatenblock K2, etc. abgelegt. Zum Ablegen kann beispielsweise die dynamische Konfigurationszelle desjeweiligen Basiselements an der jeweiligen Basiselementposition x1, y1; ...; x6, y6 genutzt werden.

In einem Rekonstruktionsschritt 104 werden dann nach erfolgreicher Programmierung des elektronischen Bauteils BE zur Laufzeit die Schlüsseldaten K aus den Schlüsselteildatenblöcken K1, K2, ..., K6 wieder zusammengesetzt. Dabei werden die Schlüsselteildatenblöcke aus den jeweiligen Basiselementen B1, ..., Bn bzw. aus den jeweils zugehörigen Konfigurationszellen an den vorgegebenen Basiselementpositionen x1, y1; ...; x6, y6 ausgelesen. Dazu kann das Sperrdatenelement CF bzw. die darin abgelegte Positionsinformation x1, y1; ...; x6, y6 der Schlüsselteildatenblöcke K1, ..., K6 herangezogen werden. Die Schlüsselteildatenblöcke K1, ..., K6 können beispielsweise mittels einer Steuereinheit bzw. eines Kontrollers über eine spezielle Konfigurationsschnittstelle des elektronischen Bauteils BE aus den Basiselementen bzw. den zugehörigen Konfigurationszellen ausgelesen werden. Die Information, welche Basiselemente B1, ..., Bn bzw. zugehörigen Konfigurationszellen von der Steuereinheit für die Schlüsseldaten K auszulesen sind, wird dann vom Sperrdatenelement CF zur Verfügung gestellt.

Alternativ oder zusätzlich kann auch eine eigene Applikation vorgesehen sein, mit welcher im Rekonstruktionsschritt 104 die Schlüsselteildatenblöcke K1, ..., K6 aus den jeweiligen, durch die ausgewählten Basiselementpositionen x1, y1; ...; x6, y6 festgelegten Basiselementen B1, ..., Bn bzw. den zugehörigen Konfigurationszellen über die spezielle Konfigurationsschnittstelle ausgelesen und zu den Schlüsseldaten K zusammengesetzt werden. Die Information über die entsprechenden Basiselementposition x1, y1; ...; x6, y6 wird ebenfalls durch das Sperrdatenelement CF zur Verfügung gestellt. Die Applikation kann dabei als ausführbare Softwareeinheit bzw. Software-Anwendung ausgestaltet sein, welche in einer internen Speichereinheit des elektronischen Bauteils oder in einer externen Speichereinheit abgelegt ist.

Durch das erfindungsgemäße Verfahren werden die kryptographischen Schlüsseldaten K nie direkt in einem Quellekode bzw. in den Konfigurationsdaten CON einer aktuellen Programmierung des elektronischen Bauteils BE gespeichert, sondern erst zur Laufzeit aus den Basiselementen B1, ..., Bn an ausgewählten Basiselementpositionen x1, y1; ...; x6, y6 extrahiert und zusammengesetzt. Die jeweiligen Positionen x1, y1; ...; x6, y6 der Schlüsselteildatenblöcke K1, ..., K6 werden dabei erst beim Laden der Konfigurationsdaten CON bzw. beim Platzierung der Logikelemente der aktuellen Programmierung in der Grundstruktur des elektronischen Bauteils BE mit Hilfe der Positionierungsvorgaben im Sperrdatenelement CF festgelegt. Die Positionen x1, y1; ...; x6, y6 der Schlüsselteildatenblöcke K1, ..., K6 sind daher vom aktuellen Quellkode bzw. den aktuellen Konfigurationsdaten CON unabhängig und die Schlüsseldaten K ohne Kenntnis des Sperrdatenelements CF bzw. der Lock-Constraint-Datei CF nicht rekonstruierbar.

## Patentansprüche

1. Verfahren zum Speichern von Schlüsseldaten in einem elektronischen Bauteil (BE), welches als programmierbare, integrierte Schaltung, insbesondere als Field Programmable Gate Array oder FPGA, ausgeführt ist und eine aus Basiselementen (B1, ..., Bn) bestehende Grundstruktur aufweist, wobei für eine jeweils aktuelle Programmierung des elektronischen Bauteils (BE) Konfigurationsdaten (CON) in die jeweiligen Basiselemente (B1, ..., Bn) geladen und flüchtig abgespeichert werden, ***dadurch gekennzeichnet, dass:***
- die Schlüsseldaten (K) in Schlüsselteildatenblöcke (K1, ..., K6) unterteilt werden (101) und für jeden Schlüsselteildatenblock (K1, ..., K6) eine Basiselementposition in der Grundstruktur des elektronischen Bauteils (BE) ausgewählt wird (102), wobei die für die jeweiligen Schlüsseldatenblöcke (K1, ..., K6) ausgewählten Basiselementpositionen in einem Sperrdatenelement (CF) abgelegt werden;
- dass beim Erstellen der Konfigurationsdaten (CON) der jeweils aktuellen Programmierung des elektronischen Bauteils (BE) die für die Schlüsselteildatenblöcke (K1, ..., K6) ausgewählten Basiselementpositionen derart berücksichtigt werden (102), dass die ausgewählten Basiselementpositionen aus dem Sperrdatenelement (CF) mittels einer so genannten Constraint-Datei in die Konfigurationsdaten der jeweils aktuellen Programmierung eingearbeitet werden;
- dass beim Laden der Konfigurationsdaten (CON) der jeweils aktuellen Programmierung in den elektronischen Bauteil (BE) die Schlüsselteildatenblöcke (K1, ..., K6) in jenen Basiselementen abgelegt werden (103), welche durch die ausgewählten und im Sperrdatenelement (CF) abgelegten Basiselementpositionen vorgegeben werden;
- und dass nach erfolgter Programmierung des elektronischen Bauteils (BE) die Schlüsselteildatenblöcke (K1, ..., K6) aus den jeweiligen, durch die ausgewählten Basiselementpositionen vorgegebenen Basiselementen (B1, ..., Bn) ermittelt und zu den Schlüsseldaten (K) zusammengesetzt werden (104).

2. Verfahren nach Anspruch 1, ***dadurch gekennzeichnet, dass*** das Sperrdatenelement (CF) in einem Permanentspeicher, idealerweise verschlüsselt, abgelegt wird (102), wobei der Permanentspeicher außerhalb des elektronischen Bauelements angeordnet ist.

3. Verfahren nach einen der Ansprüche 1 bis 2, ***dadurch gekennzeichnet, dass*** die Schlüsseldaten (K) derart in Schlüsselteildatenblöcke (K1, ..., K6) unterteilt werden (101), dass der jeweilige Schlüsselteildatenblock (K1, ..., K6) genau in einem Basiselement (B1, ..., Bn) der Grundstruktur ablegbar ist.

4. Verfahren nach einem der vorangegangenen Ansprüche, ***dadurch gekennzeichnet, dass*** eine Auswahl der Basiselementpositionen für die Schlüsseldatenteilblöcke (K1, ..., K6) nach einem Zufallsprinzip durchgeführt wird (102) .

5. Verfahren nach einem der vorangegangenen Ansprüche, ***dadurch gekennzeichnet, dass*** ein Basiselement (B1, ..., Bn) der Grundstruktur des elektronischen Bauteils (BE) von einer so genannten Lookup-Table- oder LUT-Einheit und einer zugeordneten, dynamischen Konfigurationszelle gebildet wird.

6. Verfahren nach Anspruch 5, ***dadurch gekennzeichnet, dass*** die Konfigurationszelle des Basiselements (B1, ..., Bn) als so genanntes Static RAM ausgeführt wird.

7. Verfahren nach einem der Ansprüche 1 bis 6, ***dadurch gekennzeichnet, dass*** die Schlüsselteildatenblöcke (K1, ..., K6) von einer Steuereinheit über eine Konfigurationsschnittstelle des elektronischen Bauteils (BE) unter Nutzung einer Information über die ausgewählten Basiselementpositionen aus den jeweiligen Basiselementen (B1, ..., Bn) ausgelesen und zu den Schlüsseldaten (K) zusammengesetzt werden (104).

8. Verfahren nach einem der Ansprüche 1 bis 6, ***dadurch gekennzeichnet, dass*** die Schlüsselteildatenblöcke (K1, ..., K6) mit Hilfe einer eigenen Applikation aus den jeweiligen Basiselementen (B1, ..., Bn) ausgelesen und zu den Schlüsseldaten (K) zusammengesetzt werden, wobei von der Applikation eine Information über die ausgewählten Basiselementpositionen verwendet wird (104).

## Claims

1. Method for storing key data in an electronic component (BE) that is embodied as a programmable integrated circuit, in particular as a field programmable gate array or FPGA, and has a basic structure consisting of base elements (B1, ..., Bn), wherein a respective current programming of the electronic component (BE) involves configuration data (CON) being loaded into the respective base elements (B1, ..., Bn) and stored in volatile fashion,
**characterized in that**:
- the key data (K) are divided (101) into key data subblocks (K1, ..., K6) and a base element position in the basic structure of the electronic component (BE) is selected (102) for each key data subblock (K1, ..., K6), wherein the base element positions selected for the respective key data subblocks (K1, ..., K6) are filed in a lockout data element (CF);
- the creation of the configuration data (CON) for the respective current programming of the electronic component (BE) takes into consideration (102) the base element positions selected for the key data subblocks (K1, ..., K6) such that the selected base element positions from the lockout data element (CF) are incorporated into the configuration data for the respective current programming by means of what is known as a constraint file;
- the loading of the configuration data (CON) for the respective current programming into the electronic component (BE) involves the key data subblocks (K1, ..., K6) being filed (103) in those base elements that are stipulated by the selected base element positions filed in the lockout data element (CF);
- and after the electronic component (BE) has been programmed the key data subblocks (K1, ..., K6) are ascertained from the respective base elements (B1, ..., Nn) stipulated by the selected base element positions and are assembled (104) to form the key data (K).

2. Method according to Claim 1, **characterized in that** the lockout data element (CF) is filed (102), ideally in encrypted form, in a permanent memory, wherein the permanent memory is arranged outside the electronic component.

3. Method according to either of Claims 1 and 2, **characterized in that** the key data (K) are divided (101) into key data subblocks (K1, ..., K6) such that the respective key data subblock (K1, ..., K6) is able to be filed in precisely one base element (B1, ..., Bn) of the basic structure.

4. Method according to one of the preceding claims, **characterized in that** a selection regarding the base element positions for the key data subblocks (K1, ..., K6) is made (102) according to a random principle.

5. Method according to one of the preceding claims, **characterized in that** a base element (B1, ..., Bn) of the basic structure of the electronic component (BE) is formed by what is known as a lookup-table or LUT unit and an assigned, dynamic configuration cell.

6. Method according to Claim 5, **characterized in that** the configuration cell of the base element (B1, ..., Bn) is embodied as what is known as static RAM.

7. Method according to one of Claims 1 to 6, **characterized in that** the key data subblocks (K1, ..., K6) are read from the respective base elements (B1, ..., Bn) by a control unit via a configuration interface of the electronic component (BE) by using information about the selected base element positions and are assembled (104) to form the key data (K).

8. Method according to one of Claims 1 to 6, **characterized in that** the key data subblocks (K1, ..., K6) are read from the respective base elements (B1, ..., Bn) with the aid of a separate application and are assembled to form the key data (K), wherein the application uses (104) information about the selected base element positions.

## Revendications

1. Procédé de mémorisation de données de clé dans un composant électronique (BE) qui est réalisé en tant que circuit intégré programmable, et plus particulièrement en tant que Field Programmable Gate Array ou FPGA et qui présente une structure de base composée d'éléments de base (B1, ... , Bn), des données de configuration (CON) étant, pour une programmation respectivement actuelle du composant électronique (BE), chargées dans les éléments de base respectifs (B1, ... , Bn) et sauvegardées de manière volatile, **caractérisé en ce que** :
- les données de clé (K) sont réparties (101) en blocs de données de clé partiels (K1, ... , K6) et, pour chaque bloc de données de clé partiel (K1, ... , K6) une position d'élément de base est sélectionnée (102) dans la structure de base du composant électronique (BE), les positions d'élément de base sélectionnées pour les blocs de données de clé respectifs (K1, ... , K6) étant déposées dans un élément de données de blocage (CF) ;
- lors de la création des données de configuration (CON) de la programmation respectivement actuelle du composant électronique (BE), les positions d'élément de base sélectionnées pour les blocs de données de clé partiels (K1, ... , K6) étant prises en compte (102) de telle sorte que les positions d'élément de base sélectionnées sont, à partir de l'élément de données de blocage (CF), incorporées, au moyen de ce qu'il est convenu d'appeler un fichier de contrainte, dans les données de configuration de la programmation respectivement actuelle ;
- lors du chargement des données de configuration (CON) de la programmation respectivement actuelle dans le composant électronique (BE), les blocs de données de clé partiels (K1, ... , K6) sont déposés (103) dans les éléments de base qui sont spécifiés par les positions d'élément de base sélectionnées et déposées dans l'élément de données de blocage (CF) ;
- et, une fois la programmation du composant électronique (BE) effectuée, les blocs de données de clé partiels (K1, ... , K6) sont déterminés à partir des éléments de base respectifs (B1, ..., Bn) spécifiés par les positions d'élément de base sélectionnées, et sont assemblés (104) pour obtenir les données de clé (K).

2. Procédé selon la revendication 1, **caractérisé en ce que** l'élément de données de blocage (CF) est déposé (102) dans une mémoire permanente, idéalement sous forme cryptée, la mémoire permanente étant agencée en dehors du composant électronique.

3. Procédé selon l'une des revendications 1 à 2, **caractérisé en ce que** les données de clé (K) sont réparties (101) en blocs de données de clé partiels (K1, ..., K6) de manière telle que le bloc de données de clé partiel respectif (K1, ..., K6) peut être déposé exactement dans un élément de base (B1, ..., Bn) de la structure de base.

4. Procédé selon l'une des revendications précédentes, **caractérisé en ce qu'**une sélection des positions d'élément de base pour les blocs de données de clé partiels (K1, ..., K6) est effectuée (102) selon un principe du choix aléatoire.

5. Procédé selon l'une des revendications précédentes, **caractérisé en ce qu'**un élément de base (B1, ..., Bn) de la structure de base du composant électronique (BE) est formé par ce qu'il est convenu d'appeler une unité Lookup Table ou LUT et une cellule de configuration dynamique associée.

6. Procédé selon la revendication 5, **caractérisé en ce que** la cellule de configuration de l'élément de base (B1, ..., Bn) est réalisée en tant que ce qu'il est convenu d'appeler une RAM statique.

7. Procédé selon l'une des revendications 1 à 6, **caractérisé en ce que** les blocs de données de clé partiels (K1, ..., K6) sont extraits, à partir des éléments de base respectifs (B1, ..., Bn), par une unité de commande via une interface de configuration du composant électronique (BE) en utilisant une information sur les positions d'élément de base sélectionnées, et assemblés (104) pour obtenir les données de clé (K).

8. Procédé selon l'une des revendications 1 à 6, **caractérisé en ce que** les blocs de données de clé partiels (K1, ..., K6) sont extraits à l'aide d'une propre application à partir des éléments de base respectifs (B1, ..., Bn) et assemblés pour obtenir les données de clé (K), l'application utilisant (104) une information sur les positions d'élément de base sélectionnées.
